# EUROPÄISCHE PATENTSCHRIFT

(11) **EP 1 523 860 B1**
(45) Veröffentlichungstag und Bekanntmachung des Hinweises auf die Patenterteilung: **21.02.2007**
(21) Anmeldenummer: 03725126.1
(22) Anmeldetag: 30.04.2003
(51) Int. Cl.: H04Q 7/38, G07F 7/10

(54) **VERFAHREN UND FUNKKOMMUNIKATIONSSYSTEM ZUR ÜBERTRAGUNG VON NUTZINFORMATIONEN ALS DIENST AN MEHRERE TEILNEHMERSTATIONEN**
METHOD AND RADIO COMMUNICATION SYSTEM FOR THE TRANSMISSION OF USEFUL INFORMATION AS A SERVICE FOR SEVERAL USER STATIONS
PROCEDE ET SYSTEME DE RADIOCOMMUNICATION PERMETTANT DE TRANSMETTRE DES INFORMATIONS UTILES EN TANT QUE SERVICE A PLUSIEURS POSTES D'ABONNE

(30) Priorität: 06.05.2002 EP 02010088
(43) Veröffentlichungstag der Anmeldung: 20.04.2005
(73) Patentinhaber: SIEMENS AKTIENGESELLSCHAFT, 80333 München (DE)
(72) Erfinder: HOFMANN, Jürgen, 86504 Merching (DE); SCHNIEDENHARN, Jörg, 13587 Berlin (DE); WEHMEIER, Lars, 10115 Berlin (DE)
(86) Internationale Anmeldenummer: PCT/EP2003/004576
(87) Internationale Veröffentlichungsnummer: WO 2003/094560

(56) Entgegenhaltungen:
- EP-A- 1 164 804
- WO-A-99/01848
- NL-C- 1 007 409
- US-B1- 6 370 380

## Beschreibung

Die Erfindung betrifft ein Verfahren zur Übertragung von Nutzinformationen in einem Funkkommunikationssystem mit mindestens einer Funknetzwerkkontrolleinrichtung, mindestens einer Basisstation und mindestens einer Teilnehmerstation nach dem Oberbegriff des Anspruchs 1.

Die Erfindung betrifft ferner ein Funkkommunikationssystem nach dem Oberbegriff des Anspruchs 7.

Kommunikationssysteme gewinnen zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing.

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen der mindestens einen Basisstation und der mindestens einen Teilnehmerstation erfolgt über eine Funkkommunikations-Schnittstelle. Die mindestens eine Basisstation und Funknetzwerkkontrolleinrichtung sind Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems mit einer Zugangseinrichtung des Kernnetzes verbunden.

Neben individuellen Nutzinformationen werden in Funkkommunikationssystemen Daten übertragen, die mehreren Benutzern zur Verfügung gestellt werden. Beispielsweise umfassen solche Nutzinformationen Video streams. Nutzinformationen, welche mehreren Teilnehmern zur Verfügung gestellt werden, werden unter dem Begriff MBMS (Multimedia Broadcast/Multicast Service) zusammengefasst.

Grundsätzlich ist von großer Bedeutung, mit jeglichen Netzwerkressourcen so sparsam wie möglich umzugehen. Man ist besonders bestrebt, dass das Funknetzwerk so wenig Informationen wie möglich über die jeweiligen Teilnehmer benötigt, da ansonsten potentiell eine signifikante Menge im Funknetzwerk gespeichert werden muss.

Es sind daher Funkkommunikationssysteme mit Anbindung an ein Kernnetz bekannt, wobei folgende Netzwerknoten wichtige Funktionen für die Übertragung der genannten Dienste aufweisen:
- die Zugangseinrichtung zum Kernnetz (SGSN Serving GPRS Support Node), welche sowohl dienstspezifische als auch teilnehmerspezifische Informationen hält,
- die Funknetzwerkkontrolleinrichtung (RNC Radio Network Controller), welche dienstspezifische Informationen hält.

Aus der US 6370380 B1 ist ein Verfahren bekannt, bei dem ein mobiles Terminal eine Kommunikationsverbindung von einem ersten Zugangspunkt zu einem zweiten Zugangspunkt wechselt. Vor dem Verbindungswechsel wird dem mobilen Terminal von dem ersten Zugangspunkt eine Nachricht, die ein Sicherheitszeichen (security token) enthält, übermittelt. Bevor die Kommunikationsverbindung mit dem zweiten Zugangspunkt aufgebaut wird, übermittelt das mobile Terminal eine Nachricht an den zweiten Zugangspunkt, die das Sicherheitszeichen enthält. Zusätzlich dazu enthält diese Nachricht auch einen oder mehrere Identitätscodes, die zur Identifizierung des mobilen Terminals dienen. Nachfolgend fordert der zweite Zugangspunkt von dem ersten Zugangspunkt ein Sicherheitszeichen für das mobile Terminal an und übermittelt zur Identifizierung des mobilen Terminals mit der Anforderung einen oder mehrere der vom mobilen Terminal empfangenen Identitätscodes. Durch einen Vergleich der Sicherheitszeichen, die der zweite Zugangspunkt von dem mobilen Terminal und dem ersten Zugangspunkt erhalten hat, erfolgt eine Authentisierung des mobilen Terminals. Nur bei Übereinstimmung der Sicherheitszeichen wird nachfolgend eine Kommunikationsverbindung zwischen dem mobilen Terminal und dem zweiten Zugangspunkt aufgebaut.

Der Erfindung liegt daher die Aufgabe zu Grunde, ein Verfahren und ein Funkkommunikationssystem der eingangs genannten Art aufzuzeigen, welche einen sparsamen Umgang mit den Netzwerkressourcen mit sich bringen. Insbesondere sollte im Funkkommunikationssystem beurteilt werden können, ob eine bestimmte Teilnehmerstation zu einem Service zugelassen werden kann, ohne dass die Teilnehmerstation selbst bekannt ist. Ferner sollte ein Zellwechsel möglichst einfach erfolgen können.

Die Aufgabe wird für das Verfahren mit den Merkmalen des Anspruchs 1 und für die Funkkommunikation mit den Merkmalen des Anspruchs 7 gelöst.

Vorteilhafte Ausgestaltung und Weiterbildungen sind Gegenstand der abhängigen Ansprüche.

Erfindungsgemäß halten die Funknetzwerkkontrolleinrichtungen und die Teilnehmerstation einen dienstspezifischen Schlüssel vor, der die Nutzungsberechtigung zu dem Dienst umfasst.

Mit der Verwendung des Schlüssels kann im Funknetzwerk eine Zugangs- bzw. Nutzungsberechtigung zu einem Dienst für mehrere Teilnehmer geprüft werden, ohne dass das Funknetzwerk teilnehmerspezifische Informationen im Hinblick auf den Dienst benötigt. Bevorzugt wird daher ein dienstspezifischer Schlüssel verwendet, welcher für mehrere Teilnehmerstationen gültig ist und nicht teilnehmerspezifisch ausgewählt ist.

Mit Vorteil überträgt die Zugangseinrichtung des Kernnetzes beim Start des Dienstes sowohl der Funknetzwerkkontrolleinrichtung als auch der Teilnehmerstation den dienstspezifischen Schlüssel. Auf diese Weise kann der Signalisierungsaufwand bei sicherer Übertragung der Zugangsberechtigung an die Einrichtungen des Funknetzwerks gering gehalten werden.

In Ausgestaltung der Erfindung wird der dienstspezifische Schlüssel über einen teilnehmerspezifischen Funkkanal von der Basisstation an die Teilnehmerstation übertragen. Auf diese Weise kann sichergestellt werden, dass der Schlüssel der Teilnehmerstation über eine sichere Verbindung übermittelt wird und keine unbefugten Teilnehmerstationen den Dienst unberechtigter Weise nutzen können.

Die Erfindung ermöglicht, dass bei einem Zellwechsel innerhalb des Funknetzwerks die Zugangsberechtigung der Teilnehmerstation überprüft werden kann, ohne dass eine Interaktion mit der Zugangseinrichtung zum Kernnetz durchgeführt werden müsste. Denn-bei einem Zellwechsel in eine Funkzelle, welche derselben Funknetzwerkkontrolleinrichtung zugeordnet ist, ist der Funknetzwerkkontrolleinrichtung die Zugangsberechtigung der Teilnehmerstation bereits bekannt . Im Fall dass die Teilnehmerstationen in eine andere Funkzelle, welche eine weitere Funknetzwerkkontrolleinrichtung zugeordnet ist wechselt, kann sich die Teilnehmerstation bei der weiteren Funknetzwerkkontrolleinrichtung unter Verwendung des dienstspezifischen Schlüssels anmelden. Auf diese Weise ist sichergestellt, dass bei jedem Zellwechsel eine Interaktion mit der Zugangseinrichtung des Kernnetzes vermieden werden kann. Der dienstspezifische Schlüssel kann von der Teilnehmerstation bei der Anmeldung bei der weiteren Funknetzwerkkontrolleinrichtung der neuen Funkzelle bspw. für die Verschlüsselung der Nachricht, durch Benutzung des Schlüssels für eine Integrity Protection, durch Anwendung des Schlüssels auf die Adresse der Teilnehmerstation oder ähnliche Mechanismen Verwendung finden. Da der Funknetzkontrolleinrichtung der benutzte Schlüssel bekannt ist, kann die Funknetzwerkkontrolleinrichtung beurteilen, ob die jeweilige Teilnehmerstation sich ordnungsgemäß sich zum Start des Dienstes bei der Zugangseinrichtung des Kernnetzes angemeldet hatte.

In Weiterbildung der Erfindung wird der dienstspezifische Schlüssel als Kontext eines über das Kernnetz angebotene Dienstes in der mindestens einen Funknetzwerkkontrolleinrichtung bzw. in den Funknetzwerkkontrolleinrichtungen vorgehalten werden, die diesen Dienst unterstützen.

Bevorzugt handelt es sich bei dem Dienst um einen Multimedia-Dienst (z.B. Video Streams).

Der dienstspezifische Schlüssel kann ein temporärer oder ein fixer Schlüssel sein. Die Auswahl der Art des Schlüssels kann sich dabei beispielsweise an Sicherheitsaspekten orientieren.

Beim erfindungsgemäßen Funkkommunikationssystem sind in der Funknetzwerkkontrolleinrichtung und in der Teilnehmerstation Mittel vorhanden, um einen dienstspezifischen Schlüssel vorzuhalten, der die Nutzungsberechtigung zu dem Dienst umfasst.

Die Zugangseinrichtung des Kernnetzes kann Mittel aufweisen, beim Start des Dienstes sowohl der Funknetzwerkkontrolleinrichtung als auch der Teilnehmerstation den dienstspezifischen Schlüssel zu übermitteln.

Mit Vorteil sind im erfindungsgemäßen Funkkommunikationssystem Mittel zum Übertragen des dienstspezifischen Schlüssels von der Basisstation an die Teilnehmerstation über einen teilnehmerspezifischen Funkkanal vorgesehen.

Das beschriebene Funkkommunikationssystem eignet sich insbesondere zur Durchführung des erfindungsgemäßen Verfahrens.

Nachfolgend soll die Erfindung anhand einer Figur näher erläutert werden.

Hierbei zeigt:

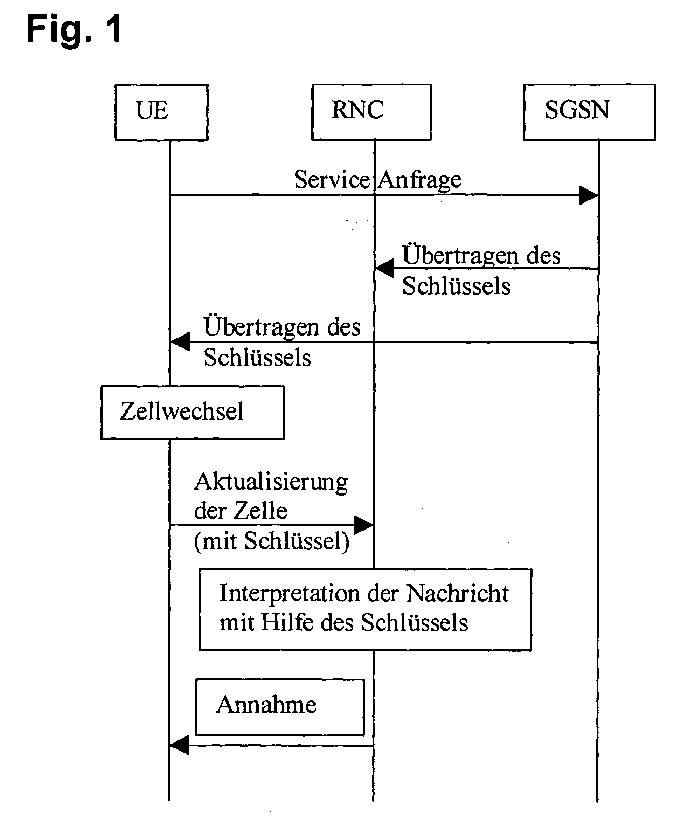

- Fig. 1:: Die Signalisierung zwischen Teilnehmerstation, Funknetzwerkkontrolleinrichtung und Zugangseinrichtung des Kernnetzes.

In Fig. 1 sind die Signalisierungen im Hinblick auf die Nutzung eines Dienstes durch eine beispielhaft ausgewählte Teilnehmerstation (UE User Equipment) dargestellt. Zunächst die Teilnehmerstation (UE) den Dienst bei der Zugangseinrichtung des Kernnetzes (SGSN Serving GPRS Support Node) an. Anschließend überträgt die Zugangseinrichtung des Kernnetzes (SGSN) den Schlüssel zur Funknetzwerkkontrolleinrichtung (RNC Radio Network Controller). Außerdem überträgt die Zugangseinrichtung des Kernnetzes (SGSN) den Schlüssel zur Teilnehmerstation (UE). Die Teilnehmerstation kann anschließend die Nutzinformationen - ebenso wie andere Teilnehmerstationen auch - empfangen (Key assignment).

Im Falle eines Zellwechsels (Cell change) erfolgt die Aktualisierung der Funkzelle durch Zellaktualisierung (Cell update), wobei die Teilnehmerstation auch den dienstspezifischen Schlüssel (with key) an die Funknetzwerkkontrolleinrichtung (RNC) übermittelt. Bei der Funknetzwerkkontrolleinrichtung (RNC) erfolgt eine Interpretation unter Zuhilfenahme des dienstspezifischen Schlüssels (Interpretation of message with help key). Von der Funknetzwerkkontrolleinrichtung (RNC) erfolgt die Bestätigung der Zugangsberechtigung zu dem Dienst für mehrere Teilnehmer durch Übermittlung einer Nachricht ("Accept").

An diesem Beispiel ist deutlich erkennbar, dass mit der Verwendung des Schlüssels im Funknetzwerk eine Zugangs- bzw. Nutzungsberechtigung zu einem Dienst für die Teilnehmerstation (UE) geprüft werden kann, ohne dass das Funknetzwerk teilnehmerspezifische Informationen im Hinblick auf den Dienst benötigt. Der Signalisierungsaufwand ist dabei gering gehalten.

## Patentansprüche

1. Verfahren zur Übertragung von Nutzinformationen eines MBMS-Dienstes in einem Funkkommunikationssystem mit mindestens einer Funknetzwerkkontrolleinrichtung (RNC), mindestens einer Basisstation und mindestens zwei Teilnehmerstationen (UE),
wobei die mindestens eine Basisstation mit den mindestens zwei Teilnehmerstationen (UE) über eine Funkkommunikations-Schnittstelle verbunden ist,
wobei die mindestens eine Basisstation und die Funknetzwerkkontrolleinrichtung (RNC) Bestandteile eines Basisstationssubsystems sind,
wobei die Funknetzwerkkontrolleinrichtung (RNC) mit einer Zugangseinrichtung eines Kernnetzes (SGSN) verbunden ist,
**dadurch gekennzeichnet,**
**dass** ein für den MBMS-Dienst spezifischer Schlüssel, der die Nutzungsberechtigung zu dem Dienst umfasst, sowohl von der Funknetzwerkkontrolleinrichtung (RNC) als auch von den zwei Teilnehmerstationen (UE) vorgehalten wird, wobei der für den MBMS-Dienst spezifische Schlüssel keine spezifische Information über die Teilnehmerstationen (UE) umfasst, und dass die Funknetzkontrolleinrichtung (RNC) von wenigstens einer der Teilnehmerstationen (UE) bei einem Zellwechsel einen Schlüssel empfängt und nachfolgend nur dann die Nutzinformationen des MBMS-Dienstes an die Teilnehmerstation (UE) überträgt, wenn eine ausschließlich auf Basis des empfangenen Schlüssels durchgeführte Überprüfung der Funknetzkontrolleinrichtung (RNC) ergibt, dass der empfangene Schlüssel mit dem für den MBMS-Dienst spezifischen Schlüssel übereinstimmt.

2. Verfahren nach Anspruch 1,
**dadurch gekennzeichnet,**
**dass** die Zugangseinrichtung des Kernnetzes (SGSN) beim Start des MBMS-Dienstes sowohl der Funknetzwerkkontrolleinrichtung (RNC) als auch der Teilnehmerstation (UE) den für den MBMS-Dienst spezifischen Schlüssel übermittelt.

3. Verfahren nach Anspruch 2,
**dadurch gekennzeichnet,**
**dass** der für den MBMS-Dienst spezifische Schlüssel über einen teilnehmerspezifischen Funkkanal von der Basisstation an die Teilnehmerstationen (UE) übertragen wird.

4. Verfahren nach einem der Ansprüche 1 bis 3,
**dadurch gekennzeichnet,**
**dass** sich bei einem Zellwechsel einer der beiden Teilnehmerstationen (UE) in eine andere Funkzelle, welche einer weiteren Funknetzwerkkontrolleinrichtung (RNC) zugeordnet ist, die Teilnehmerstation (UE) bei der weiteren Funknetzwerkkontrolleinrichtung (RNC) unter Verwendung des für den MBMS-Dienst spezifischen Schlüssels anmelden.

5. Verfahren nach einem der Ansprüche 1 bis 4,
**dadurch gekennzeichnet,**
**dass** der für den MBMS-Dienst spezifische Schlüssel als Kontext des über das Kernnetz angebotenen MBMS-Dienstes in den Funknetzwerkkontrolleinrichtungen (RNC) vorgehalten wird, die den MBMS-Dienst unterstützen.

6. Verfahren nach einem der Ansprüche 1 bis 5,
**dadurch gekennzeichnet,**
**dass** der dienstspezifische Schlüssel ein temporärer oder fixer Schlüssel ist.

7. Funkkommunikationssystem zur Übertragung von Nutzinformationen eines MBMS-Dienstes an mehrere Teilnehmerstationen (UE) umfassend mindestens eine Funknetzwerkkontrolleinrichtung (RNC), mindestens eine Basisstation und mindestens zwei Teilnehmerstationen (UE),
wobei die mindestens eine Basisstation mit den mindestens zwei Teilnehmerstationen (UE) über eine Funkkommunikations-Schnittstelle verbunden ist,
wobei die mindestens eine Basisstation und die Funknetzwerkkontrolleinrichtung (RNC) Bestandteile eines Basisstationssubsystems sind,
wobei die Funknetzwerkkontrolleinrichtung (RNC) mit einer Zugangseinrichtung eines Kernnetzes (SGSN) verbunden ist,
**dadurch gekennzeichnet,**
**dass** in der Funknetzwerkkontrolleinrichtung (RNC) und in den Teilnehmerstationen (UE) Mittel vorhanden sind, um einen für den MBMS-Dienst spezifischen Schlüssel vorzuhalten, der die Nutzungsberechtigung zu dem Dienst umfasst, wobei der für den MBMS-Dienst spezifische Schlüssel keine spezifischen Informationen über die Teilnehmerstationen (UE) umfasst, und dass die Funknetzkontrolleinrichtung (RNC) Mittel aufweist, um bei einem Zellwechsel wenigstens einer der Teilnehmerstationen (UE) beim Empfang eines Schlüssel von der wenigstens einen der Teilnehmerstationen nachfolgend nur dann die Nutzinformationen des MBMS-Dienstes an die Teilnehmerstation zu übertragen, wenn eine ausschließlich auf Basis des empfangenen Schlüssels durchgeführte Überprüfung durch entsprechend ausgebildete Mittel der Funknetzkontrolleinrichtung (RNC) ergibt, dass der empfangene Schlüssel mit dem für den MBMS-Dienst spezifischen Schlüssel übereinstimmt.

8. Funkkommunikationssystem nach Anspruch 7,
**dadurch gekennzeichnet,**
**dass** die Zugangseinrichtung des Kernnetzes (SGSN) Mittel aufweist, beim Start des MBMS-Dienstes sowohl der Funknetzwerkkontrolleinrichtung (RNC) als auch der Teilnehmerstation (UE) den für den MBMS-Dienst spezifischen Schlüssel zu übermitteln.

9. Funkkommunikationssystem nach Anspruch 8,
**dadurch gekennzeichnet,**
**dass** Mittel zum Übertragen des für den MBMS-Dienstspezifischen Schlüssels von der Basisstation an die Teilnehmerstationen (UE) über jeweils einen teilnehmerspezifischen Funkkanal vorgesehen sind.

## Claims

1. Method for transmitting useful information of an MBMS service in a radio communication system with at least one radio network control device (RNC), at least one base station and at least two user stations (UE),
with the at least one base station being connected to the at least two user stations (UE) via a radio communication interface,
with the at least one base station and the radio network control device (RNC) being components of a base station subsystem,
with the radio network control device (RNC) being connected to an access device of a core network (SGSN),
**characterised in that**
an MBMS service-specific key, which includes authorisation to use the service, is held by both the radio network control device (RNC) and the two user stations (UE), with the MBMS service-specific key not including any specific information about the user stations (UE), and that the radio network control device (RNC) receives a key from at least one of the user stations (UE) during a cell change and then transmits the useful information of the MBMS service to the user station (UE) only if a verification carried out by the radio network control device (RNC) solely based on the received key shows that the received key corresponds to the MBMS service-specific key.

2. Method according to claim 1,
**characterised in that**
the access device of the core network (SGSN) transmits the MBMS service-specific key to both the radio network control device (RNC) and the user station (UE) at the start of the MBMS service.

3. Method according to claim 2,
**characterised in that**
the MBMS service-specific key is transmitted via a user-specific radio channel from the base station to the user stations (UE).

4. Method according to one of claims 1 to 3,
**characterised in that**
in the event of a cell change by one of the two user stations (UE) to another radio cell which is assigned to a further radio network control device (RNC), the user station (UE) registers with the further radio network control device (RNC) using the MBMS service-specific key.

5. Method according to one of claims 1 to 4,
**characterised in that**
the MBMS service-specific key is held as the context of the MBMS service offered via the core network in the radio network control devices (RNC) which support the MBMS service.

6. Method according to one of claims 1 to 5,
**characterised in that**
the service-specific key is a temporary or permanent key.

7. Radio communication system for transmitting useful information of an MBMS service to several user stations (UE) comprising at least one radio network control device (RNC), at least one base station and at least two user stations (UE), with the at least one base station being connected to the at least two user stations (UE) via a radio communication interface,
with the at least one base station and the radio network control device (RNC) being components of a base station subsystem,
with the radio network control device (RNC) being connected to an access device of a core network (SGSN),
**characterised in that**
means are available in the radio network control device (RNC) and in the user stations (UE) for holding an MBMS service-specific key, which includes authorisation to use the service, with the MBMS service-specific key not including any specific information about the user stations (UE), and that the radio network control device (RNC) has means enabling it, in the event of a cell change of at least one of the user stations (UE), on receipt of a key from at least one of the user stations then to transmit the useful information of the MBMS service to the user station only if a verification carried out by correspondingly configured means of the radio network control device (RNC) solely based on the received key shows that the received key corresponds to the MBMS service-specific key.

8. Radio communication system according to claim 7,
**characterised in that**
the access device of the core network (SGSN) has means for transmitting the MBMS service-specific key to both the radio network control device (RNC) and the user station (UE) at the start of the MBMS service.

9. Radio communication system according to claim 8,
**characterised in that**
means are provided for transmitting the MBMS service-specific key from the base station to the user stations (UE) via a user-specific radio channel in each instance.

## Revendications

1. Procédé pour la transmission d'informations utiles d'un service MBMS dans un système de radiocommunication avec au moins un dispositif de contrôle du réseau radio (RNC), au moins une station de base et au moins deux stations d'abonné (UE),
la au moins une station de base étant reliée aux au moins deux stations d'abonné (UE) par une interface de radiocommunication, la au moins une station de base et le dispositif de contrôle du réseau radio (RNC) étant des composants d'un sous-système de station de base,
le dispositif de contrôle du réseau radio (RNC) étant relié à un dispositif d'accès d'un réseau-clé (SGSN),
**caractérisé en ce que**,
un code spécifique pour le service MBMS, qui comprend l'autorisation d'utilisation pour le service, est fourni aussi bien par le dispositif de contrôle du réseau radio (RNC) que par les deux stations d'abonné (UE), le code spécifique pour le service MBMS ne comprenant pas une information spécifique sur les stations d'abonné (UE), et **en ce que** le dispositif de contrôle du réseau radio (RNC) reçoit un code d'au moins une des stations d'abonné (UE) lors d'un changement de cellule et transmet ensuite les informations utiles du service MBMS à la station d'abonné (UE) uniquement dans les cas où un contrôle du dispositif de contrôle du réseau radio (RNC), effectué exclusivement sur la base du code reçu, fait apparaître que le code reçu concorde avec le code spécifique pour le service MBMS.

2. Procédé selon la revendication 1,
**caractérisé en ce que**,
le dispositif d'accès du réseau-clé (SGSN) transmet le code spécifique pour le service MBMS lors du démarrage du service MBMS aussi bien au dispositif de contrôle du réseau radio (RNC) qu'à la station d'abonné (UE).

3. Procédé selon la revendication 2,
**caractérisé en ce que**,
le code spécifique pour le service MBMS est transmis par un canal radio spécifique à l'abonné de la station de base à la station d'abonné (UE) .

4. Procédé selon l'une quelconque des revendications 1 à 3,
**caractérisé en ce que**,
lors d'un changement de cellule de l'une des deux stations d'abonné (UE) en une autre cellule radio, qui est attribuée à un autre dispositif de contrôle du réseau radio (RNC), les stations d'abonné (UE) se signalent auprès de l'autre dispositif de contrôle du réseau radio (RNC) en utilisant le code spécifique pour le service MBMS.

5. Procédé selon l'une quelconque des revendications 1 à 4,
**caractérisé en ce que**
le code spécifique au service MBMS est fourni en tant que contexte du service MBMS proposé par le réseau clé dans le dispositif de contrôle du réseau radio (RNC), qui supportent le service MBMS.

6. Procédé selon l'une quelconque des revendications 1 à 5,
**caractérisé en ce que**,
le code spécifique au service est un code temporaire ou fixe.

7. Système de radiocommunication pour la transmission d'informations utiles d'un service MBMS à plusieurs stations d'abonné (UE) comprenant au moins un dispositif de contrôle du réseau radio (RNC), au moins une station de base et au moins deux stations d'abonné (UE), la au moins une station de base étant reliée aux au moins deux stations d'abonné (UE) par une interface de radiocommunication,
la au moins une station de base et le dispositif de contrôle du réseau radio (RNC) étant des composants d'un sous-système de station de base,
le dispositif de contrôle du réseau radio (RNC) étant relié à un dispositif d'accès d'un réseau-clé (SGSN),
**caractérisé en ce que**
dans le dispositif de contrôle du réseau radio (RNC) et dans les stations d'abonné (UE) sont présents des moyens pour fournir un code spécifique pour le service MBMS, qui comprend l'autorisation d'utilisation pour le service, le code spécifique pour le service MBMS ne comprenant pas les informations spécifiques sur les stations d'abonné (UE), et **en ce que** le dispositif de contrôle du réseau radio (RNC) présente des moyens pour transmettre, lors d'un changement de cellule d'au moins l'une des stations d'abonné (UE) lors de la réception d'un code de la au moins une des stations d'abonné, ultérieurement les informations utiles du service MBMS à la station d'abonné uniquement dans les cas où un contrôle effectué exclusivement sur la base du code reçu par des moyens conçus en conséquence du dispositif de contrôle du réseau radio (RNC) fait apparaître que le code reçu concorde avec le code spécifique pour le service MBMS.

8. Système de radiocommunication selon la revendication 7,
**caractérisé en ce que**
le dispositif d'accès du réseau clé (SGSN) présente des moyens pour transmettre le code spécifique pour le service MBMS lors du démarrage du service MBMS aussi bien au dispositif de contrôle du réseau radio (RNC) qu'à la station d'abonné (UE).

9. Système de radiocommunication selon la revendication 8,
**caractérisé en ce que**,
des moyens sont prévus pour la transmission du code spécifique au service MBMS de la station de base aux stations d'abonné (UE) au moyen respectivement d'un canal radio spécifique à l'abonné.
